(19) Europäisches Patentamt
European Patent Office
Office européen des brevets

(11) **EP 4 597 442 A1**

(12) **EUROPEAN PATENT APPLICATION**

(43) Date of publication:
06.08.2025 Bulletin 2025/32

(21) Application number: 25153921.9

(22) Date of filing: 24.01.2025

(51) International Patent Classification (IPC):
*G06V 10/26* (2022.01)   *G06V 10/44* (2022.01)
*G06V 10/774* (2022.01)   *G06V 10/82* (2022.01)

(52) Cooperative Patent Classification (CPC):
**G06V 10/82; G06V 10/26; G06V 10/454;
G06V 10/774**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024   US 202418431912**

(71) Applicant: **Microsoft Technology Licensing, LLC
Redmond, WA 98052 (US)**

(72) Inventors:
• **DONGDONG, Chen
Redmond, 98052 (US)**
• **YUNSHENG, Li
Redmond, 98052 (US)**
• **LU, Yuan
Redmond, 98052 (US)**
• **XUELU, Feng
Redmond, 98052 (US)**

(74) Representative: **CMS Cameron McKenna Nabarro
Olswang LLP
Cannon Place
78 Cannon Street
London EC4N 6AF (GB)**

(54) **PLURALISTIC SALIENT OBJECT DETECTION**

(57)   Example solutions for pluralistic salient object detection are disclosed. A received image shows multiple objects, such as a first object and a second object. A pluralistic object detector is trained to learn tokens. When provided with the image and the first token, it generates a first segmentation mask corresponding to the first object, but not the second object, and when provided with the image and the second token, it generates a second segmentation mask corresponding to at least the second object (and possibly also the first image). When the pluralistic object detector is trained on five tokens, up to five different segmentation masks, each corresponding to a different selection of up to five objects, may be generated. Additionally, a quality predictor is disclosed that assigns quality scores to each of the different segmentation masks, without requiring ground truth for the image.

FIG. 1

EP 4 597 442 A1

**Description**

BACKGROUND

Salient object detection (SOD) is a classical computer vision task that seeks to automatically segment salient objects within a given input image. A salient object is one that draws a viewer's attention in an image. However, due to the inherent complexity of real-world images and varying user intentions, ambiguities often arise in defining salient objects. For example, as when an image shows two or more objects, segmentation becomes ambiguous.

A dataset that is widely used for SOD tasks and model training, DUTS (named after the institution that produced it), has a large number of images that are each associated with only a single ground-truth segmentation mask, despite a notable proportion of images featuring inherent ambiguity due to the presence of multiple salient objects. Since the dataset was annotated by multiple human annotators, each with their own preference and focus, there are annotation inconsistency issue across many images. These annotation inconsistencies risk adversely affecting the performance of SOD functions, which are designed to generate only a single segmentation mask for a single mask, due to the ambiguous supervision signal.

SUMMARY

The disclosed examples are described in detail below with reference to the accompanying drawing figures listed below. The following summary is provided to illustrate some examples disclosed herein.

Example solutions for pluralistic salient object detection include: receiving a first image including a first object of the first image and a second object of the first image; based on at least receiving the first image and a first token, generating, with a pluralistic object detector, a first segmentation mask; based on at least receiving the first image and a second token, generating, with the pluralistic object detector, a second segmentation mask, wherein the first segmentation mask corresponds to the first object of the first image but not the second object of the first image, and the second segmentation mask corresponds to at least the second object of the first image; persisting the first segmentation mask and the second segmentation mask.

BRIEF DESCRIPTION OF THE DRAWINGS

The disclosed examples are described in detail below with reference to the accompanying drawing figures listed below:

FIG. 1 illustrates an example architecture that advantageously performs pluralistic salient object detection;

FIG. 2A illustrates an exemplary image containing a plurality of salient obj ects;

FIG. 2B illustrates an exemplary consideration for determining mask quality;

FIG. 3 illustrates generation of multiple segmentation masks from an image having multiple salient objects, using an example of the architecture of FIG. 1;

FIG. 4 illustrates generation of quality scores for segmentation masks, using an example of the architecture of FIG. 1;

FIG. 5 illustrates further detail for various components of the architecture of FIG. 1;

FIG. 6 and 7 illustrate further detail for various components of FIG. 5;

FIG. 8 shows a flowchart illustrating exemplary operations that may be performed when using example architectures, such as the architecture of FIG. 1;

FIGs. 9A, 9B, and 9C show flowcharts illustrating further detail for various operations of the flowchart of FIG. 8;

FIG. 10 shows another flowchart illustrating exemplary operations that may be performed when using example architectures, such as the architecture of FIG. 1; and

FIG. 11 shows a block diagram of an example computing device suitable for implementing some of the various examples disclosed herein.

Corresponding reference characters indicate corresponding parts throughout the drawings.

DETAILED DESCRIPTION

Example solutions for pluralistic salient object detection are disclosed. A received image shows multiple objects, such as a first object and a second object. A pluralistic object detector is trained to learn tokens. When provided with the image and the first token, it generates a first segmentation mask corresponding to the first object, but not the second object, and when provided with the image and the second token, it generates a second segmentation mask corresponding to at least the second object (and possibly also the first object). When the pluralistic object detector is trained on five tokens, up to five different segmentation masks, each corresponding to a different set of salient objects, may be generated. Additionally, a quality predictor is disclosed that assigns quality scores to each of the different segmentation masks, without requiring ground truth for the image.

Aspects of the disclosure solve multiple problems that are necessarily rooted in computer technology and further the art of machine vision by generating multiple segmentation masks for images showing multiple salient objects. This removes ambiguity for downstream computer vision or other image processing tasks, because different segmentation masks are available for different scenarios (e.g., scenarios requiring a segmentation mask for a single object, scenarios requiring a segmentation mask for two objects, etc.). This is accomplished, at least in part by, generating, with a pluralistic object detector, a first segmentation mask and a second segmentation mask, wherein the first segmentation mask corresponds to a first object of the image but not a second object of the image, and the second segmentation mask corresponds to at least the second object of the image.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

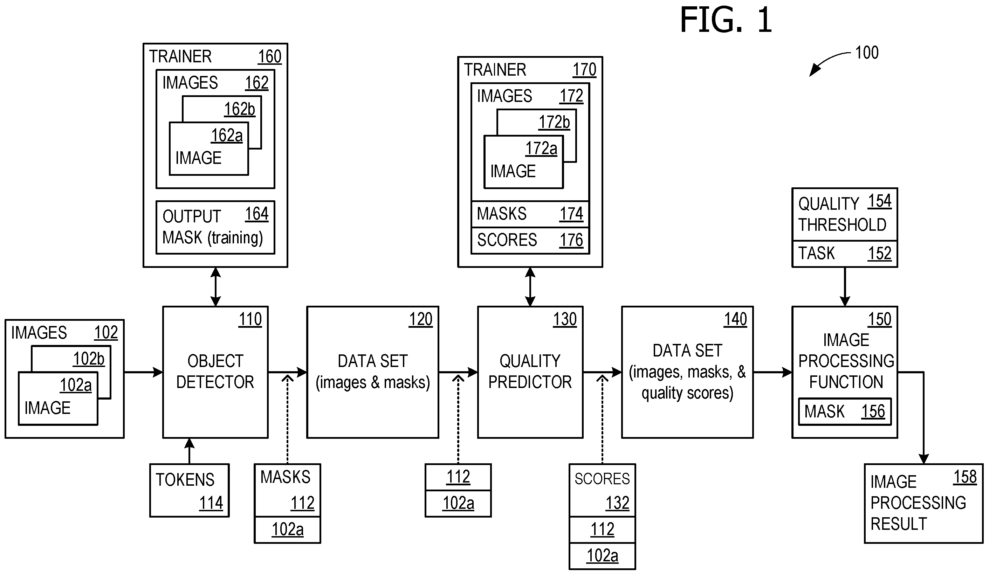

FIG. 1 illustrates an example architecture 100 that advantageously performs pluralistic salient object detection, and further, scores the quality of the resulting segmentation masks. A set of images 102 is used for generating a set of segmentation masks, including multiple segmentation masks per image. For example, set of images 102 has an image 102a and an image 102b, and segmentation masks 112 (which includes three segmentation masks in the example described in the following figures) are generated for image 102a. Other images in set of images 102, such as image 102b, will each be used to produce another version of segmentation masks 112 (one set per each image). In some examples, set of images 102 includes at least some of the DUTS large-scale saliency detection dataset, which contains more than 10,000 training images and more than 5,000 test images.

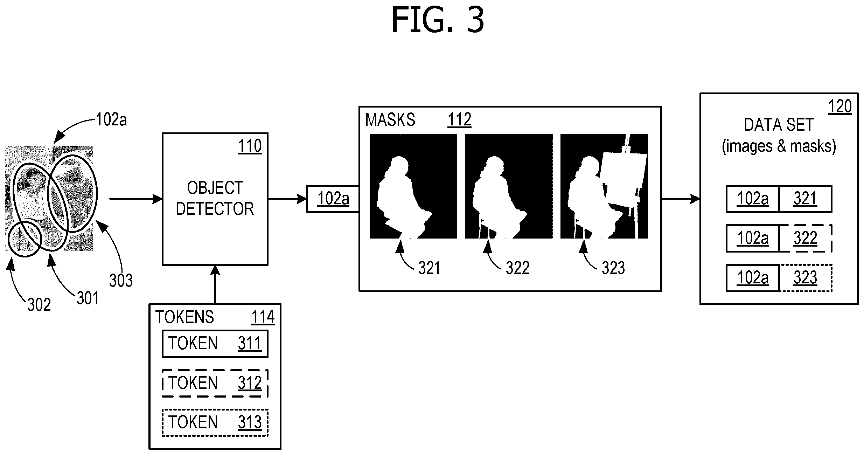

Segmentation masks 112, and segmentation masks for other images of set of images 102, are generated by a pluralistic object detector 110. A token from a plurality of tokens 114 is used to select which of multiple possible segmentation masks is generated by pluralistic object detector 110. Pluralistic object detector 110 is trained by a trainer 160 to learn tokens of plurality of tokens 114, as described below, and in general, outputs one segmentation mask per token. For example, when provided an image with three salient objects, a first token causes pluralistic object detector 110 to output a first segmentation mask corresponding to a single one of the objects, a second token causes pluralistic object detector 110 to output a second segmentation mask corresponding to a different object or set of objects (possibly overlapping with the first segmentation mask), and a third token causes pluralistic object detector 110 to output a segmentation mask corresponding to yet a different set of objects (possibly overlapping with the first and/or second segmentation masks). This is shown in further detail in FIG. 3.

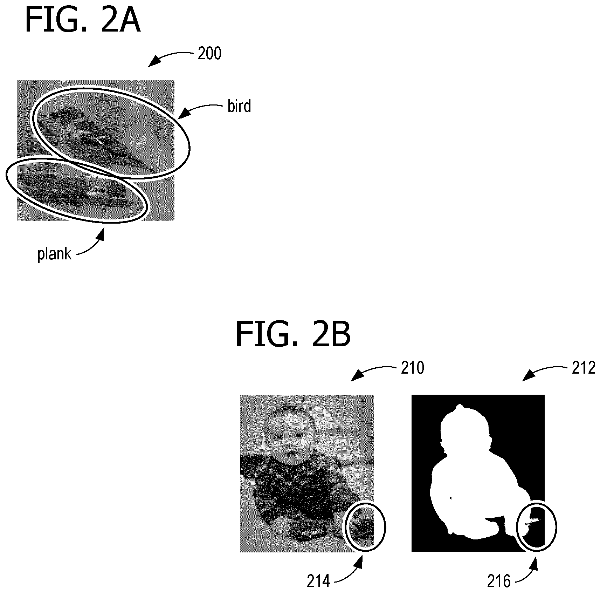

In some examples, pluralistic object detector 110 learns five tokens to output up to five different segmentation masks for images with up to five different salient objects. When an image has fewer salient objects than the number of tokens, some of the tokens will result in duplicate masks, in some examples. A segmentation mask corresponds to an object of an image when an active pixel of the segmentation mask has a relative position that corresponds to a pixel in the image where the pixel is part of the object shown in the image. In some scenarios, a segmentation mask may be represented as a monochrome image in which an active pixel of the segmentation mask is represented as a white pixel on a black background or a black pixel on a white background. Examples are shown in FIGs. 2B and 3.

Pluralistic object detector 110 outputs segmentation masks 112, which are saved (persisted) from memory into a data set 120 in non-volatile physical media (i.e., persistent memory), with each segmentation mask of segmentation masks 112 associated with image 102a within data set 120. As used herein, persisting means that data outlives the process that creates it, meaning that segmentation masks 112 remain within data set 120 even after the process of generating segmentation masks 112 concludes (e.g., after any software, that may have been used to create and output segmentation masks 112, has terminated execution).

A quality predictor 130 receives the images and associated segmentation masks and generates quality scores for each of the segmentation masks within data set 120, for example, quality scores 132 for segmentation masks 112 (e.g., in the example described below, three of each). As described below, a trainer 170 trains quality predictor 130 to score segmentation masks without needing ground truth, which in the case of object detection producing segmentation masks is a segmentation mask that has been deemed to be the correct result for identifying an objects within an image. The reason that quality predictor 130 is trained without ground truth is because, for images having multiple salient objects, there is no single ground truth. Quality predictor 130 outputs quality scores 132, which are saved (persisted) into a data set 140, with each quality score of quality scores 132 associated with image 102a and the respective segmentation mask of segmentation masks 112 within data set 140. In some examples, a triplet {I,P,Q}, is used, with an image I, a predicted segmentation mask P, and a quality score Q.

Data set 140, with a large number of images, multiple segmentation masks corresponding to multiple objects within each of the images (that have multiple objects), and quality scores for each of the segmentation masks, is ready to support computer vision and other image processing tasks (collectively, image processing tasks). Example tasks include training other object detectors, automatically editing images (e.g., replacing backgrounds "behind" an object or objects), and separating images into various regions to assist a human with editing an image. Another example tasks is an artificial intelligence (AI) cursor, where AI model can automatically analyze the salient objects within one image and allow the user to select the objects easily (e.g., simply hover the cursor over an object) to analyze the object's attributes and search for images of similar objects on the internet.

An image processing function 150 provides the computational capability to perform an image processing task 152 in images from data set 140, such as the examples mentioned previously, and outputs an image processing result 158 (e.g., an altered image, a trained object detector, or another output product). Because the quality of image processing result 158 may depend on the quality of the input material from data set 140, a user is able to specify a quality threshold 154, in some examples. In some examples, quality threshold 154 may be used to filter segmentation masks, so that only segmentation masks having an assigned quality score meeting quality threshold 154 are used in image processing task 152. In some examples, quality threshold 154 is not used, and only the highest-scoring segmentation mask (the segmentation mask associated with the highest quality score) is used in image processing task 152. A representative selected segmentation mask 156 is shown, representing a segmentation mask that meets quality threshold 154 or is the highest-scoring segmentation mask associated with an image used in image processing task 152.

Turning to the training of pluralistic object detector 110 and quality predictor 130, two trainers are provided. Trainer 160 uses a plurality of training images 162 to train pluralistic object detector 110 to learn plurality of tokens 114. In some examples, pluralistic object detector 110 is trained with a combination of Cross Entropy loss and Dice loss, using the Adam optimizer, aiming to predict a segmentation mask that is as similar to a ground truth segmentation mask possible. Other optimizers may also be used. In some examples, pluralistic object detector 110 is trained with a different loss function, such as Focal loss ("Focal Loss for Dense Object Detection") and Weighted/Balanced Cross-Entropy Loss.

Each token of plurality of tokens 114 may be a vector of numbers. Plurality of training images 162 has multiple images, each with multiple objects, such as an image 162a and an image 162b, each image associated with a plurality of ground truth segmentation masks for training, each ground truth segmentation mask corresponding to a different set of objects in its associated image to use the training comparisons/evaluations. For example, if image 162a has three objects, during training, when pluralistic object detector 110 is learning a token for two objects and generates an output segmentation mask 164, output segmentation mask 164 is compared with the ground truth for two objects for image 162a.

Trainer 160 then manages the feedback for training pluralistic object detector 110 on the results of the comparison. In some examples the loss function, $\mathcal{L}_{mask}$, uses cross entropy:

$$\mathcal{L}_{mask} = \lambda\mathcal{L}_{cross\_entropy} + \mathcal{L}_{dice} \qquad \text{Eq. (1)}$$

where $\lambda$ is 2.5 in some implementations, and $\mathcal{L}_{dice}$ is the Dice loss. In some examples, only the mask with the minimum loss (relative to the training ground truth) is used for backpropagation.

Trainer 170 uses a plurality of training images 172, each with an associated plurality of segmentation masks, with each segmentation mask having a quality score, to train quality predictor 130. For example, plurality of training images 172 comprises an image 172a and an image 172b. Image 172a is associated with a plurality of segmentation masks 174 and a plurality of quality scores 176, with each quality score of plurality of quality scores 176 associated with a segmentation mask of plurality of segmentation masks 174. Image 172b has a similar set of associated segmentation masks and quality scores. In some examples, quality predictor 130 is trained with the Mean Square Error (MSE) loss objective, aiming to align with the human annotated scores, using the Adam optimizer.

In some examples, each of the quality scores, such as each of plurality of quality scores 176, is provided by a human assessments, in which the assessors are instructed to grade only the segmentation mask quality itself (e.g., complete for an object, well-defined edges), not whether the segmentation mask is for the "wrong" object, too many objects, or excluded an object. In this way, quality predictor 130 is trained to mimic human assessment of quality, independently of the number of objects to which a segmentation mask corresponds or omits. In some examples, a mean squared error (MSE) from the human-provided score (e.g., training ground truth) is used as the training loss function.

FIG. 2A shows an image 200 having two salient objects: a bird and a plank upon which the bird is standing. Some object detectors may generate a segmentation mask for only the bird, omitting the plank; some object detectors may generate a segmentation mask for both the bird and the plank; however pluralistic object detector 110 is able to generate at least two segmentation masks, one for only the bird that omits the plank, and another for both the bird and the plank.

FIG. 2B illustrates a segmentation mask quality issue. An image 210 shows a baby human and has an associated segmentation mask 212. Segmentation mask 212 has a notable error. A portion of the baby's foot, identified by an annotation 214 (i.e., an oval surrounding the baby's foot within image 210) is missing from segmentation mask 212, as identified by an annotation 216 (i.e., an oval surrounding the location where the baby's foot should have been detected within segmentation mask 212).

FIG. 3 illustrates generation of three segmentation masks 321-323 from image 102a. Image 102a has three salient objects: A human (an object 301), a chair (an object 302) upon which the human is sitting, and an easel holding a painting (object 303). Plurality of tokens 114 is shown with three tokens: a token 311, a token 312, and a token 313.

When image 102a and token 311 are provided to pluralistic object detector 110, pluralistic object detector 110 generates a segmentation mask 321 corresponding to object 301 (the human), but not object 302 or object 303. When image 102a and token 312 are provided to pluralistic object detector 110, pluralistic object detector 110 generates a segmentation mask 322 corresponding to both object 301 and object 302 (the chair), but not object 303. When image 102a and token 313 are provided to pluralistic object detector 110, pluralistic object detector 110 generates a segmentation mask 323 corresponding to all of object 301, object 302, and object 303 (the easel). Together, segmentation mask 321, segmentation mask 322, and segmentation mask 323 form segmentation masks 112 in the example of FIG. 1. Image 102a is persisted within data set 120, associated with each of segmentation mask 321, segmentation mask 322, and segmentation mask 323. In some examples, segmentation mask 322 corresponds to object 302, but not object 301, and/or segmentation mask 323 corresponds to object 303 but not object 301 and/or object 302.

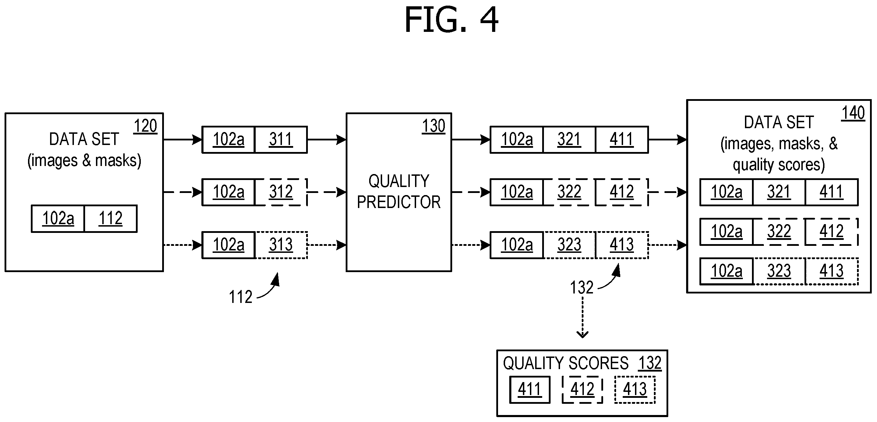

FIG. 4 illustrates generation of quality scores 132. When image 102a and segmentation mask 321 are provided to quality predictor 130, quality predictor 130 assigns a quality score 411 to segmentation mask 321. When image 102a and segmentation mask 322 are provided to quality predictor 130, quality predictor 130 assigns a quality score 412 to segmentation mask 322. When image 102a and segmentation mask 323 are provided to quality predictor 130, quality predictor 130 assigns a quality score 413 to segmentation mask 323. Together, quality score 411, quality score 412, and quality score 413 form quality scores 132 in the example of FIG. 1. Image 102a is persisted within data set 140, associated with each of segmentation mask 321 and quality score 411, segmentation mask 322 and quality score 412, and segmentation mask 323 and quality score 413. In this way, when a user (or automated process) retrieves image 102a and any of segmentation masks 311-313 from data set 140, the quality score associated with the retrieved segmentation mask is readily identifiable.

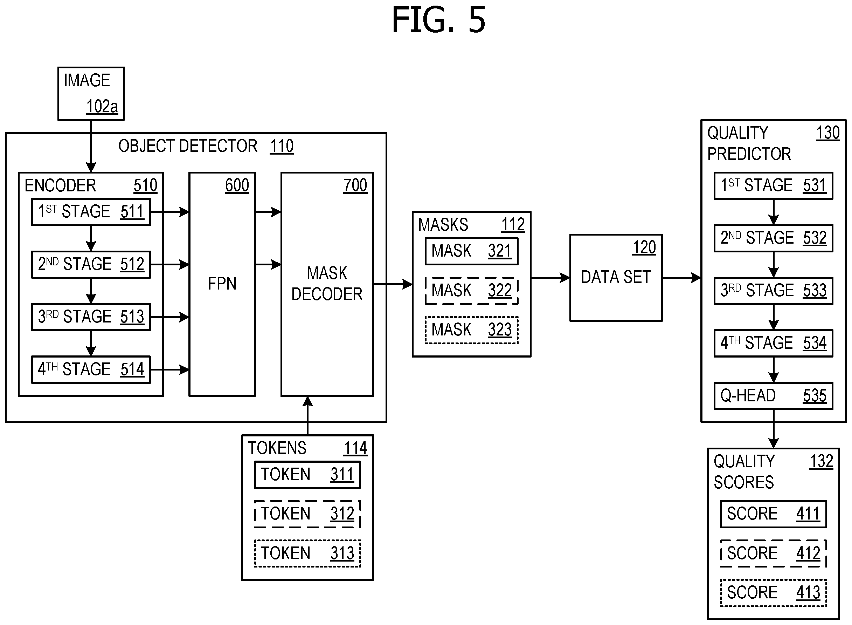

FIG. 5 illustrates further detail for various components of some examples of architecture 100. In the illustrated example, pluralistic object detector 110 comprises an encoder 510 that performs a multi-stage encoding process to extract multi-scale features from the input raw image (e.g., image 102a), a feature pyramid network 600 for aggregating multi-scale features, and a token prompt-driven mask decoder 700 using multiple learnable tokens. In some examples, encoder 510 has multiple stages, each of which has multiple transformer blocks to enhance the feature representation provided by the final stage. Feature pyramid network 600 upsamples the features of later stages by a factor of two and combines the upsampled features with the output of the next-earlier stage. The final combined features are provided to mask decoder 700, which has cross-attention, self-attention and FFN operators to predict a segmentation mask by providing the corresponding token prompt.

In some examples, encoder 510 comprises a vision transformer architecture, such as a dual attention vision transformer (DaViT), although other encoders may be used in some examples including Swin ("Hierarchical Vision Transformer using Shifted Windows") and CSwin ("CSWin Transformer: A General Vision Transformer Backbone with Cross-Shaped Windows"). In the illustrated example, encoder 510 comprises four stages, stages 511-514, each which has several blocks. In some examples, stage 511 comprises a spatial window self-attention network, stage 512 comprises a normalization and feed forward network, stage 513 comprises a channel group self-attention network, and stage 514 comprises another normalization and feed forward network.

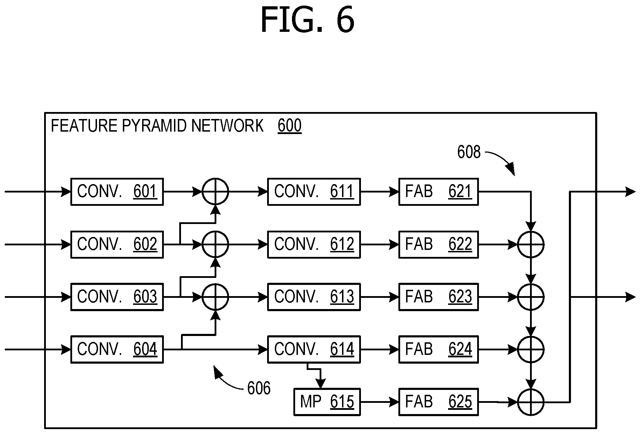

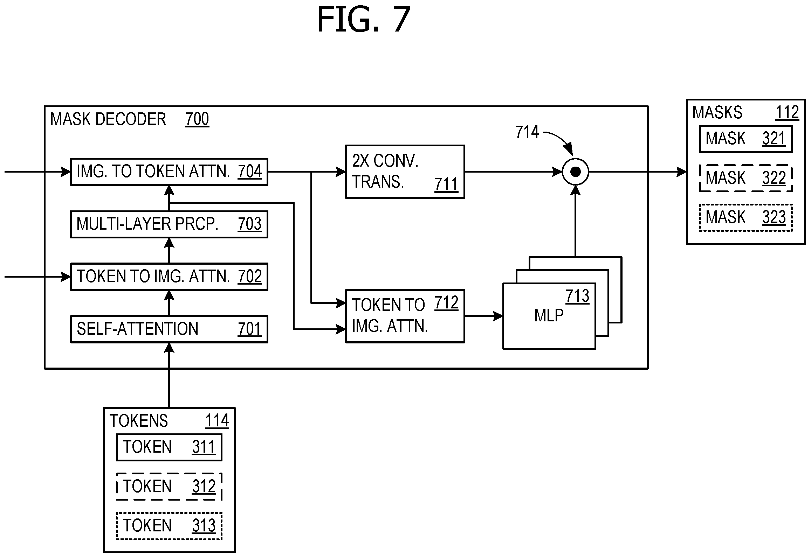

Each stage extracts a feature map from image data at a given scale or resolution. For example, stage 511 produces a feature map at a relatively course (low detail) resolution, stage 512 produces a feature map at a finer (higher detail) resolution (e.g., twice the resolution), stage 513 has even finer resolution, and stage 514 has the highest resolution (smallest scale of detail). Outputs of each of stages 511-514 are provided to feature pyramid network 600. Feature pyramid network 600 is shown and described in further detail in relation to FIG. 6, and mask decoder 700 is shown and described in further detail in relation to FIG. 7.

In some examples, quality predictor 130 comprises a multi-stage vision transformer model with the query head 535. In the illustrated example, four stages are shown, a stage 531 takes image 102a and a segmentation mask (e.g., segmentation mask 321) as input, a stage 532 follows, then a stage 533, and then a stage 534. Some examples use a different number of stages, such as five. Query head 535 ("Q head") outputs the Q vector (of the common Q, K, V vectors of transformer architectures). In some examples, each stage has multiple transformer blocks, further enhancing the semantics and representation power of intermediate features from the last stage. The final enhanced feature is provided to query head 535 to predict the final quality score.

In some examples, the quality scores assigned by humans are integer values 1 to 4, with 1 representing a human's perception of lowest quality and 4 representing the human's perception of highest quality (e.g., near perfection). In some examples, quality scores 132 are normalized to the interval [0, 1] with the set {1, 2, 3, 4} being mapped to {0.0, 0.33, 0.67, 1.0}.

FIG. 6 illustrates further detail for feature pyramid network 600. A feature pyramid network is a well-known feature extractor that takes a single-scale image of an arbitrary size as input, and outputs feature maps at multiple scales (i.e., different sizes relative to the overall image size), in a convolutional fashion, and is commonly used in image recognition and object detection functions because it is able to detect image features at different scales. As illustrated, feature pyramid network 600 has standard architecture and comprises four convolution networks corresponding to the four stages of encoder 510. A convolution network 601 receives input from stage 511 of encoder 510, a convolution network 602 receives input from stage 512, a convolution network 603 receives input from stage 513, and a convolution network 604 receives input from stage 514 of encoder 510.

The outputs of convolution networks 601-604 are combined as shown, using a bank of adders 606, and provided to additional convolution networks: a convolution network 611, a convolution network 612, a convolution network 613, and a convolution network 614. The outputs of a convolution networks 611-614 are provided a set of feature aggregation blocks (FABs). The output of convolution network 611 is provided to a feature aggregation block 621. The output of convolution network 612 is a three-dimension feature that has the same spatial dimension as the output of network 611, and is provided to a feature aggregation block 622.

Similarly, the output of convolution network 613 is also a three-dimension feature that has the same spatial dimension as the output of network 611 and is provided to a feature aggregation block 623. The output of convolution network 614 is another three-dimension feature that has the same spatial dimension as the output of network 611, and is provided to a feature aggregation block 624. Additionally, the output of convolution network 614 is provided to a maxpooling layer 615. Maxpooling layer 615 is used to downsample the output feature of convolution network 614 into a lower-resolution, forming a new feature scale. The output of maxpooling layer 615 is provided to a feature aggregation block 625, for aggregation with other scales of features, and the. The outputs of aggregation blocks 621-625 are combined by a bank of adders 608, forming the output of feature pyramid network 600.

FIG. 7 illustrates further detail for mask decoder 700. Mask decoder 700 is a "prompt conditioned" mask decoder, which uses a received token to select an output segmentation mask from a plurality of output segmentation masks. A token (e.g., token 311) of plurality of tokens 114 is provided to a self-attention network 701, the output of which is an enhanced token embedding. The output of 701 interacts with the output of feature pyramid network 600 via a token to image attention network 702 to cause the token absorb information from the image. The token is further improved by a multi-layer perceptron network 703, the output of which is interacted with the output of feature pyramid network 600 again via the image to token attention network 704 to cause the image feature to absorb information from the token.

The output of image to token attention network 704 is provided to a convolutional transformer 711 for unsampling the feature resolution by 4 times and a token to image attention network 712. The output of multi-layer perceptron network 703 is also provided to token to image attention network 712. Token to image attention network 712 outputs one token per mask to a set of token specific multi-layer perceptron networks 713. The output of multi-layer perceptron networks 713 and the output of convolutional transformer 711 are combined using a dot product 714 (one per mask) to output a segmentation mask (e.g., segmentation mask 321).

The operation of pluralistic object detector 110, thus described, may be represented as a function, F, given by:

$$Mask_n = F(X_{feature}, t_n), \quad n = 1, \dots, N \qquad \text{Eq. (2)}$$

where $Mask_n$ is the $n^{th}$ mask out of N possible masks, $X_{feature}$ is a feature or set of features in an image X, and $t_n$ is the $n^{th}$ token of N trained tokens.

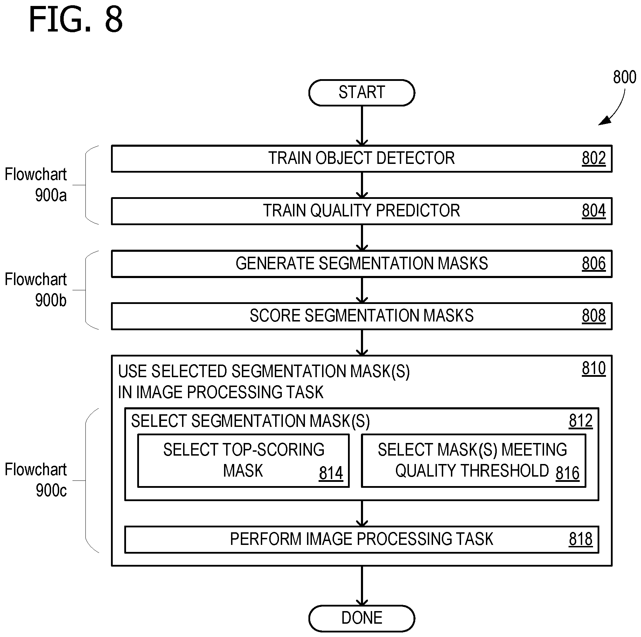

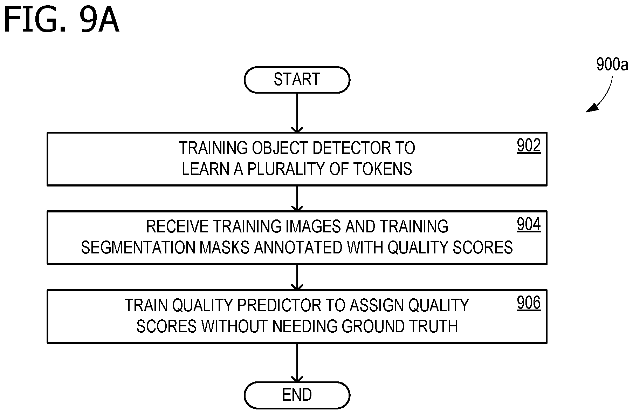

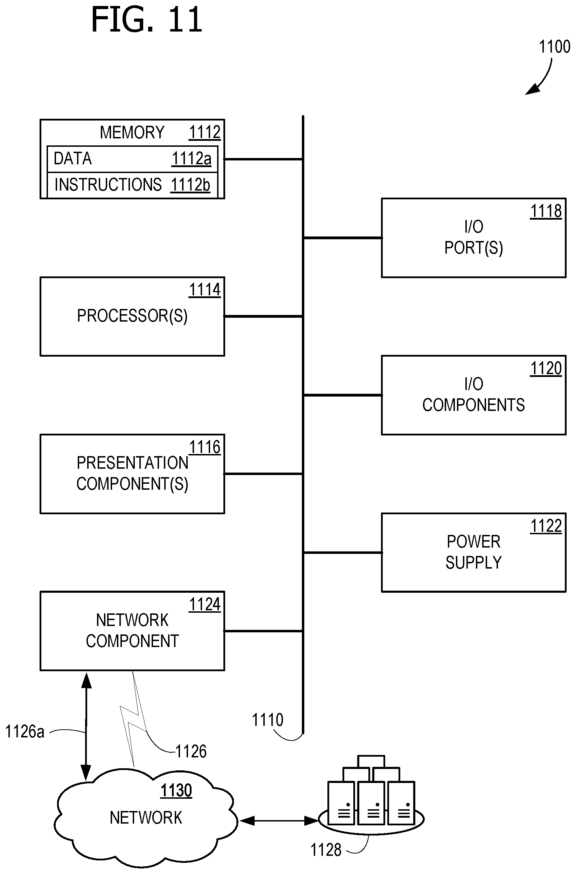

FIG. 8 shows a flowchart 800 illustrating exemplary operations that may be performed by architecture 100. In some examples, operations described for flowchart 800 are performed by computing device 1100 of FIG. 11. Flowchart 800 commences with training pluralistic object detector 110 in operation 802. Operation 804 trains quality predictor 130. Flowchart 900a of FIG. 9A shows further detail for operations 802 and 804.

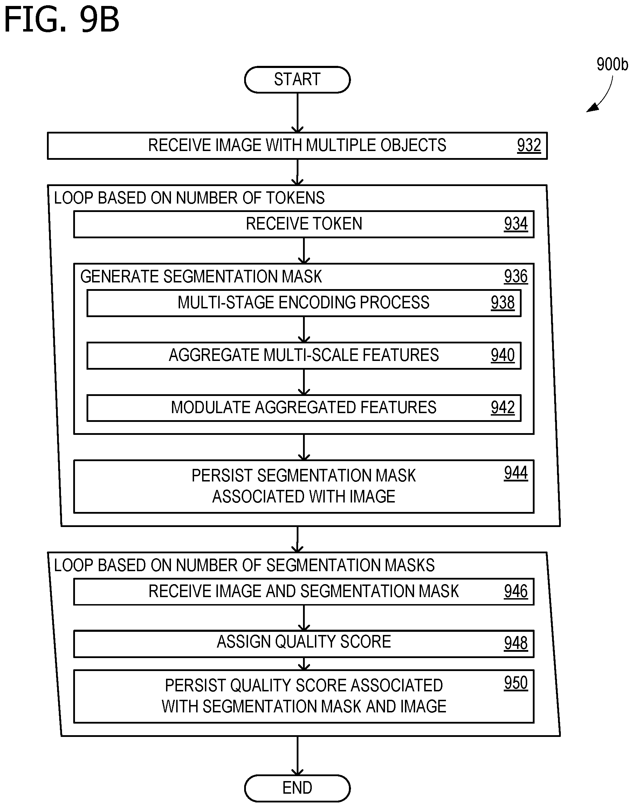

Operation 806 generates segmentation masks 112 for image 102a using pluralistic object detector 110, and operation 808 scores segmentation masks 112 using quality predictor 130. Flowchart 900b of FIG. 9B shows further detail for operations 806 and 808.

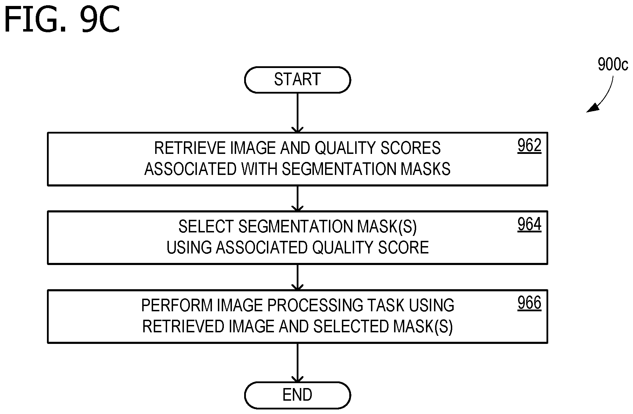

Operation 810 performs image processing task 152 using the best-scoring segmentation mask(s), and is performed using operations 812-818. Operation 812 selects one or more segmentation masks based on at least its associated quality score, for example using operation 814 or 816. Operation 814 selects the best-scoring segmentation mask for an image (e.g., selected segmentation mask 156), whereas operation 816 selects all segmentation masks having an associated quality score above quality threshold 154. Operation 818 performs image processing task 152 using the qualifying (selected) segmentation mask(s). Flowchart 900c of FIG. 9C shows further detail for operations 810-818.

FIG. 9A shows a flowchart 900a illustrating exemplary operations that may be performed by architecture 100. In some examples, operations described for flowchart 900a are performed by computing device 1100 of FIG. 11. Flowchart 900a commences with training pluralistic object detector 110 to learn token 311, token 312, and token 313 in operation 902. For example, when receiving token 311 and image 162a containing three or more objects, pluralistic object detector 110 generates output segmentation mask 164 corresponding to the first object of image 162a but not to the second object of image 162a or the third object of image 162a (e.g., equivalents of objects 301-303 in image 102a). When receiving token 312 and image 162a, pluralistic object detector 110 generates an output segmentation mask 164 corresponding to both the first object of image 162a and the second object of image 162a but not to the third object of image 162a. When receiving token 313 and image 162a, pluralistic object detector 110 generates an output segmentation mask 164 corresponding to the first object of image 162a, the second object of image 162a, and the third object of image 162a.

In operation 904, quality predictor 130 receives plurality of training images 172, a plurality of segmentation masks 174 corresponding to plurality of training images 172, and plurality of quality scores 176 associated with each segmentation mask and training image. In operation 906, trainer 170 uses plurality of training images 172, plurality of segmentation masks 174, and plurality of quality scores 176 to train quality predictor 130 to assign quality scores to segmentation masks based on an input image, without needing ground truth for the input image.

FIG. 9B shows a flowchart 900b illustrating exemplary operations that may be performed by architecture 100. In some examples, operations described for flowchart 900b are performed by computing device 1100 of FIG. 11. Flowchart 900b commences with pluralistic object detector 110 receiving image 102a showing object 301, object 302, and object 303, in operation 932. Operations 934-944 are performed for each token of plurality of tokens 114.

In the first pass, token 311 is received in operation 934. Based on at least receiving image 102a and token 311, operation 936 generates segmentation mask 321 with pluralistic object detector 110. Segmentation mask 321 corresponds to object 301, but does not correspond to object 302 or object 303. Operation 936 is performed using operations 938-942. Operation 938 performs a multi-stage encoding process to extract a plurality of multi-scale features from image 102a (e.g., using an encoder 510). Operation 940 aggregates the plurality of multi-scale features with a feature pyramid network (e.g., feature pyramid network 600). Operation 942 modulates the aggregated plurality of multi-scale features with a mask decoder (e.g., mask decoder 700) using the received token (e.g., token 311) to select an output segmentation mask (e.g., segmentation mask 321) from a plurality of output segmentation masks (e.g., segmentation masks 112). Operation 944 persists segmentation mask 321 associated with image 102a in data set 120.

In the second pass, token 312 is received in operation 934. Based on at least receiving image 102a and token 312, operation 936 generates segmentation mask 322 with pluralistic object detector 110. Segmentation mask 322 corresponds to object 301 and object 302, but does not correspond to object 303. Operation 944 persists segmentation mask 322 associated with image 102a in data set 120. In the third pass, token 313 is received in operation 934. Based on at least receiving image 102a and token 313, operation 936 generates segmentation mask 323 with pluralistic object detector 110. Segmentation mask 323 corresponds to object 301, object 302, and object 303. Operation 944 persists segmentation mask 323 associated with image 102a in data set 120.

After operation 944 completes for at least one segmentation mask, operations 946-950 are performed for each segmentation mask of segmentation masks 112, which is the same as the number of tokens of plurality of tokens 114. In some examples, operations 934-944 finish for all masks before operation 946 starts for the first segmentation mask, whereas, in some examples, operations 934-944 may be running in parallel with operations 946-950 (which are using segmentation masks from earlier iterations of operations 934-944). In the first pass, quality predictor 130 receives image 102a and segmentation mask 321 in operation 946. Based on at least receiving image 102a and segmentation mask 321, quality predictor 130 assigns quality score 411 to segmentation mask 321 in operation 948, without using ground truth for image 102a. Operation 950 persists quality score 411 associated with image 102a and associated with segmentation mask 321 in data set 140.

In the second pass, quality predictor 130 receives image 102a and segmentation mask 322 in operation 946. Based on at least receiving image 102a and segmentation mask 322, quality predictor 130 assigns quality score 412 to segmentation mask 322 in operation 948, without using ground truth for image 102a. Operation 950 persists quality score 412 associated with image 102a and associated with segmentation mask 321 in data set 140. In the third pass, quality predictor 130 receives image 102a and segmentation mask 323 in operation 946. Based on at least receiving image 102a and segmentation mask 323, quality predictor 130 assigns quality score 413 to segmentation mask 321 in operation 948, without using ground truth for image 102a. Operation 950 persists quality score 413 associated with image 102a and associated with segmentation mask 321 in data set 140.

FIG. 9C shows a flowchart 900c illustrating exemplary operations that may be performed by architecture 100. In some examples, operations described for flowchart 900c are performed by computing device 1100 of FIG. 11. Flowchart 900c commences with retrieving image 102a, quality score 411, quality score 412, and quality score 413 (from data set 140), in operation 962. Based on which of quality score 411, quality score 412, and quality score 413 is highest, and/or meets quality threshold 154, operation 964 selects the corresponding segmentation mask(s) (e.g., selected segmentation mask 156) from among segmentation mask 321, segmentation mask 322, and segmentation mask 323. Operation 966 performs image processing task 152 using image 102a and the selected segmentation mask(s).

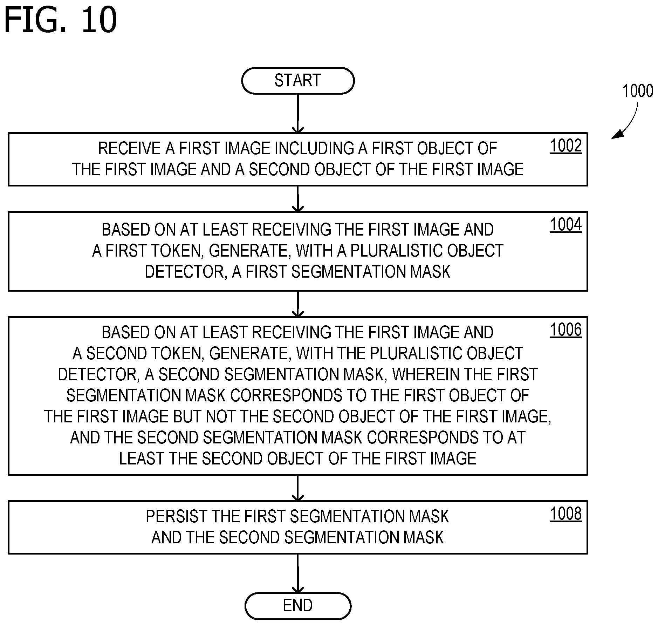

FIG. 10 shows a flowchart 1000 illustrating exemplary operations that may be performed by architecture 100. In some examples, operations described for flowchart 1000 are performed by computing device 1100 of FIG. 11. Flowchart 1000 commences with operation 1002, which includes receiving a first image including a first object of the first image and a second object of the first image. Operation 1004 includes, based on at least receiving the first image and a first token, generating, with a pluralistic object detector, a first segmentation mask.

Operation 1006 includes, based on at least receiving the first image and a second token, generating, with the pluralistic object detector, a second segmentation mask, wherein the first segmentation mask corresponds to the first object of the first image but not the second object of the first image, and the second segmentation mask corresponds to at least the second object of the first image. Operation 1008 includes persisting the first segmentation mask and the second segmentation mask.

Additional Examples

An example system comprises: a processor; and a computer-readable medium storing instructions that are operative upon execution by the processor to: receive a first image including a first object of the first image and a second object of the first image; based on at least receiving the first image and a first token, generate, with a pluralistic object detector, a first segmentation mask; based on at least receiving the first image and a second token, generate, with the pluralistic object detector, a second segmentation mask, wherein the first segmentation mask corresponds to the first object of the first image but not the second object of the first image, and the second segmentation mask corresponds to at least the second object of the first image; and persist the first segmentation mask and the second segmentation mask.

An example computer-implemented method comprises: receiving a first image including a first object of the first image and a second object of the first image; based on at least receiving the first image and a first token, generating, with a pluralistic object detector, a first segmentation mask; based on at least receiving the first image and a second token, generating, with the pluralistic object detector, a second segmentation mask, wherein the first segmentation mask corresponds to the first object of the first image but not the second object of the first image, and the second segmentation mask corresponds to at least the second object of the first image; and persisting the first segmentation mask and the second segmentation mask.

One or more example computer storage devices have computer-executable instructions stored thereon, which, on execution by a computer, cause the computer to perform operations comprising: receiving a first image including a first object of the first image, a second object of the first image, and a third object of the first image; based on at least receiving the first image and a first token, generating, with a pluralistic object detector, a first segmentation mask; based on at least receiving the first image and a second token, generating, with the pluralistic object detector, a second segmentation mask; based on at least receiving the first image and a third token, generating, with the pluralistic object detector, a third segmentation mask, wherein the first segmentation mask does not correspond to the third object of the first image, the second segmentation mask does not correspond the third object of the first image, and the third segmentation mask corresponds to the at least the third object of the first image; and persisting the first segmentation mask, the second segmentation mask, and the third segmentation mask.

Alternatively, or in addition to the other examples described herein, examples include any combination of the following:

- the first image further shows a third object of the first image;
- based on at least receiving the first image and a third token, generating, with the pluralistic object detector, a third segmentation mask;
- the first segmentation mask does not correspond to the third object of the first image;
- the second segmentation mask does not correspond the third object of the first image;
- the third segmentation mask corresponds to the third object of the first image;
- persisting the third segmentation mask;
- training the pluralistic object detector to learn the first token, the second token, and the third token;
- when receiving the first token and a second image containing three or more objects, the pluralistic object detector generates an output segmentation mask corresponding to the first object of the second image but not to the second object of the second image or the third object of the second image;
- when receiving the second token and the second image, the pluralistic object detector generates an output segmentation mask corresponding to at least the second object of the second image but not to the third object of the second image; and

- when receiving the third token and the second image, the pluralistic object detector generates an output segmentation mask corresponding to the third object of the second image;

- generating a segmentation mask comprises performing a multi-stage encoding process to extract a plurality of multi-scale features from the first image;

- generating a segmentation mask further comprises aggregating the plurality of multi-scale features with a feature pyramid network;

- generating a segmentation mask further comprises modulating the aggregated plurality of multi-scale features with a mask decoder using a received token to select an output segmentation mask from a plurality of output segmentation masks;

- based on at least receiving the first image and the first segmentation mask, assigning, by a quality predictor, a first quality score to the first segmentation mask without using ground truth for the first image;

- persisting the first quality score associated with the first image and associated with the first segmentation mask;

- based on at least receiving the first image and the second segmentation mask, assigning, by the quality predictor, a second quality score to the second segmentation mask without using ground truth for the first image;

- persisting the second quality score associated with the first image and associated with the second segmentation mask;

- based on at least receiving the first image and the third segmentation mask, assigning, by the quality predictor, a third quality score to the third segmentation mask without using ground truth for the first image;

- persisting the third quality score associated with the first image and associated with the third segmentation mask;

- retrieving the first image, the first quality score, and the second quality score;

- based on which of the first quality score and the second quality score is higher, selecting a corresponding segmentation mask from among the first segmentation mask and the second segmentation mask;

- performing an image processing task using the first image and the selected segmentation mask;

- retrieving the first image, the first quality score, the second quality score, and the third quality score;

- based on which of the first quality score, the second quality score, and the third quality score is highest, selecting a corresponding segmentation mask from among the first segmentation mask and the second segmentation mask;

- performing an image processing task using the first image and the selected segmentation mask;

- receiving a plurality of training images, a plurality of segmentation masks corresponding to the plurality of training images, and a plurality of quality scores associated with each segmentation mask and training image;

- using the plurality of training images, the plurality of segmentation masks, and the plurality of quality scores, training the quality predictor to assign quality scores to segmentation masks based on an input image, without needing ground truth for the input image;

- persisting the first segmentation mask and the second segmentation mask associated with the first image;

- persisting the third segmentation mask associated with the first image;

- persisting the first segmentation mask, the second segmentation mask, and the third segmentation mask in a common data set;

- the multi-stage encoding process uses a dual attention vision transformer;

- receiving the first token;

- receiving the second token;

- receiving the third token;

- receiving, by the quality predictor, the first image and the first segmentation mask;

- receiving, by the quality predictor, the first image and the second segmentation mask; and

- the quality predictor comprises a multi-stage vision transformer model with a query head.

While the aspects of the disclosure have been described in terms of various examples with their associated operations, a person skilled in the art would appreciate that a combination of operations from any number of different examples is also within scope of the aspects of the disclosure.

Example Operating Environment

FIG. 11 is a block diagram of an example computing device 1100 (e.g., a computer storage device) for implementing aspects disclosed herein, and is designated generally as computing device 1100. In some examples, one or more computing devices 1100 are provided for an on-premises computing solution. In some examples, one or more computing devices 1100 are provided as a cloud computing solution. In some examples, a combination of on-premises and cloud computing solutions are used. Computing device 1100 is but one example of a suitable computing environment and is not intended to suggest any limitation as to the scope of use or functionality of the examples disclosed herein, whether used singly or as part of a larger set.

Neither should computing device 1100 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 1100 includes a bus 1110 that directly or indirectly couples the following devices: computer storage memory 1112, one or more processors 1114, one or more presentation components 1116, input/output (I/O) ports 1118, I/O components 1120, a power supply 1122, and a network component 1124. While computing device 1100 is depicted as a seemingly single device, multiple computing devices 1100 may work together and share the depicted device resources. For example, memory 1112 may be distributed across multiple devices, and processor(s) 1114 may be housed with different devices.

Bus 1110 represents what may be one or more buses (such as an address bus, data bus, or a combination thereof). Although the various blocks of FIG. 11 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 11 and the references herein to a "computing device." Memory 1112 may take the form of the computer storage media referenced below and operatively provide storage of computer-readable instructions, data structures, program modules and other data for the computing device 1100. In some examples, memory 1112 stores one or more of an operating system, a universal application platform, or other program modules and program data. Memory 1112 is thus able to store and access data 1112a and instructions 1112b that are executable by processor 1114 and configured to carry out the various operations disclosed herein. Thus, computing device 1100 comprises a computer storage device having computer-executable instructions 1112b stored thereon.

In some examples, memory 1112 includes computer storage media. Memory 1112 may include any quantity of memory associated with or accessible by the computing device 1100. Memory 1112 may be internal to the computing device 1100 (as shown in FIG. 11), external to the computing device 1100 (not shown), or both (not shown). Additionally, or alternatively, the memory 1112 may be distributed across multiple computing devices 1100, for example, in a virtualized environment in which instruction processing is carried out on multiple computing devices 1100. For the purposes of this disclosure, "computer storage media," "computer storage memory," "memory," and "memory devices" are synonymous terms for the memory 1112, and none of these terms include carrier waves or propagating signaling.

Processor(s) 1114 may include any quantity of processing units that read data from various entities, such as memory 1112 or I/O components 1120. Specifically, processor(s) 1114 are programmed to execute computer-executable instructions for implementing aspects of the disclosure. The instructions may be performed by the processor, by multiple processors within the computing device 1100, or by a processor external to the client computing device 1100. In some examples, the processor(s) 1114 are programmed to execute instructions such as those illustrated in the flow charts discussed below and depicted in the accompanying drawings. Moreover, in some examples, the processor(s) 1114 represents an implementation of analog techniques to perform the operations described herein. For example, the operations may be performed by an analog client computing device 1100 and/or a digital client computing device 1100. Presentation component(s) 1116 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 1100, across a wired connection, or in other ways. I/O ports 1118 allow computing device 1100 to be logically coupled to other devices including I/O components 1120, some of which may be built in. Example I/O components 1120 include, for example but without limitation, a microphone, joystick, game pad, satellite dish, scanner, printer, wireless device, etc.

Computing device 1100 may operate in a networked environment via the network component 1124 using logical connections to one or more remote computers. In some examples, the network component 1124 includes a network interface card and/or computer-executable instructions (e.g., a driver) for operating the network interface card. Communication between the computing device 1100 and other devices may occur using any protocol or mechanism over any wired or wireless connection. In some examples, network component 1124 is operable to communicate data over public, private, or hybrid (public and private) using a transfer protocol, between devices wirelessly using short range communication technologies (e.g., near-field communication (NFC), Bluetooth™ branded communications, or the like), or a combination thereof. Network component 1124 communicates over wireless communication link 1126 and/or a wired communication link 1126a to a remote resource 1128 (e.g., a cloud resource) across network 1130. Various different examples of communication links 1126 and 1126a include a wireless connection, a wired connection, and/or a dedicated link, and in some examples, at least a portion is routed through the internet.

Although described in connection with an example computing device 1100, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**Claims**

1. A system comprising:

   a processor (1114); and
   a computer-readable medium (1112) storing instructions (1112b) that are operative upon execution by the processor to:

   receive (1002) a first image (102a) including a first object (301) of the first image and a second object (302) of the first image;
   based on at least receiving the first image and a first token (311), generate (1004), with a pluralistic object detector (110), a first segmentation mask (321);
   based on at least receiving the first image and a second token (312), generate (1006), with the pluralistic object detector, a second segmentation mask (322), wherein the first segmentation mask corresponds to the first object of the first image, and the second segmentation mask corresponds to at least the second object of the first image; and
   persist (1008) the first segmentation mask and the second segmentation mask.

2. The system of claim 1, wherein the first image further shows a third object of the first image, and wherein the instructions are further operative to:

   based on at least receiving the first image and a third token, generate, with the pluralistic object detector, a third segmentation mask, wherein the first segmentation mask does not correspond to the second or third object of the first image, the second segmentation mask does not correspond the third object of the first image, and the third segmentation mask corresponds to at least the third object of the first image; and
   persist the third segmentation mask.

3. The system of claim 2, wherein the instructions are further operative to:
   train the pluralistic object detector to learn the first token, the second token, and the third token, such that:

   when receiving the first token and a second image containing three or more objects, the pluralistic object detector generates an output segmentation mask corresponding to the first object of the second image but not to the second object of the second image or the third object of the second image;
   when receiving the second token and the second image, the pluralistic object detector generates an output segmentation mask corresponding to at least the second object of the second image but not to the third object of the second image; and
   when receiving the third token and the second image, the pluralistic object detector generates an output segmentation mask corresponding to at least the third object of the second image.

4. The system of any of claims 1-3, wherein generating the first segmentation mask comprises:

   performing an encoding process to extract a plurality of multi-scale features from the first image;
   aggregating the plurality of multi-scale features with a feature pyramid network; and
   modulating the aggregated plurality of multi-scale features with a mask decoder using the first token to select the first segmentation mask from a plurality of output segmentation masks.

5. The system of any of claims 1-4, wherein the instructions are further operative to:

   based on at least receiving the first image and the first segmentation mask, assign, by a quality predictor, a first quality score to the first segmentation mask without using ground truth for the first image;
   persist the first quality score associated with the first image and associated with the first segmentation mask;
   based on at least receiving the first image and the second segmentation mask, assign, by the quality predictor, a second quality score to the second segmentation mask without using ground truth for the first image; and
   persist the second quality score associated with the first image and associated with the second segmentation mask.

6. The system of claim 5, wherein the instructions are further operative to:

retrieve the first image, the first quality score, and the second quality score;

based on which of the first quality score and the second quality score is higher, select a corresponding segmentation mask from among the first segmentation mask and the second segmentation mask; and

perform an image processing task using the first image and the selected segmentation mask.

7. The system of claim 5 or 6, wherein the instructions are further operative to:

receive a plurality of training images, a plurality of segmentation masks corresponding to the plurality of training images, and a plurality of quality scores associated with each segmentation mask and training image; and

using the plurality of training images, the plurality of segmentation masks, and the plurality of quality scores, train the quality predictor to assign quality scores to segmentation masks based on an input image, without needing ground truth for the input image.

8. A computer-implemented method comprising:

receiving (1002) a first image (102a) including a first object (301) of the first image and a second object (302) of the first image;

based on at least receiving the first image and a first token (311), generating (1004), with a pluralistic object detector (110), a first segmentation mask (321);

based on at least receiving the first image and a second token (312), generating (1006), with the pluralistic object detector, a second segmentation mask (322), wherein the first segmentation mask corresponds to the first object of the first image, and the second segmentation mask corresponds to at least the second object of the first image; and

persisting (1008) the first segmentation mask and the second segmentation mask.

9. The computer-implemented method of claim 8, wherein the first image further shows a third object of the first image, and wherein the method further comprises:

based on at least receiving the first image and a third token, generating, with the pluralistic object detector, a third segmentation mask, wherein the first segmentation mask does not correspond to the second or third object of the first image, the second segmentation mask does not correspond the third object of the first image, and the third segmentation mask corresponds to at least the third object of the first image; and

persisting the third segmentation mask.

10. The computer-implemented method of claim 9, further comprising:
training the pluralistic object detector to learn the first token, the second token, and the third token, such that:

when receiving the first token and a second image containing three or more objects, the pluralistic object detector generates an output segmentation mask corresponding to the first object of the second image but not to the second object of the second image or the third object of the second image;

when receiving the second token and the second image, the pluralistic object detector generates an output segmentation mask corresponding to at least the second image and the second object of the second image but not to the third object of the second image; and

when receiving the third token and the second image, the pluralistic object detector generates an output segmentation mask corresponding to at least the third object of the second image.

11. The computer-implemented method of any of claims 8-10, wherein generating the first segmentation mask comprises:

performing an encoding process to extract a plurality of multi-scale features from the first image;

aggregating the plurality of multi-scale features with a feature pyramid network; and

modulating the aggregated plurality of multi-scale features with a mask decoder using the first token to select the first segmentation mask from a plurality of output segmentation masks.

12. The computer-implemented method of any of claims 8-11, further comprising:

based on at least receiving the first image and the first segmentation mask, assigning, by a quality predictor, a first quality score to the first segmentation mask without using ground truth for the first image;

persisting the first quality score associated with the first image and associated with the first segmentation mask;

based on at least receiving the first image and the second segmentation mask, assigning, by the quality predictor, a second quality score to the second segmentation mask without using ground truth for the first image; and

persisting the second quality score associated with the first image and associated with the second segmentation mask.

13. The computer-implemented method of claim 12, further comprising:

retrieving the first image, the first quality score, and the second quality score;

based on which of the first quality score and the second quality score is higher, selecting a corresponding segmentation mask from among the first segmentation mask and the second segmentation mask; and

performing an image processing task using the first image and the selected segmentation mask.

14. The computer-implemented method of claim 12 or 13, further comprising:

receiving a plurality of training images, a plurality of segmentation masks corresponding to the plurality of training images, and a plurality of quality scores associated with each segmentation mask and training image; and

using the plurality of training images, the plurality of segmentation masks, and the plurality of quality scores, training the quality predictor to assign quality scores to segmentation masks based on an input image, without needing ground truth for the input image.

15. A computer storage device having computer-executable instructions stored thereon, which, on execution by a computer, cause the computer to perform the method of any of claims 8-14.

# FIG. 1

100

**OBJECT DETECTOR** 110

IMAGES 102 — IMAGE 102a, 102b

TOKENS 114

MASKS 112 / 102a

**TRAINER** 160 — IMAGES 162 (IMAGE 162a, 162b), OUTPUT 164 MASK (training)

**DATA SET** 120 (images & masks)

112 / 102a

**QUALITY PREDICTOR** 130

**TRAINER** 170 — IMAGES 172 (IMAGE 172a, 172b), MASKS 174, SCORES 176

SCORES 132 / 112 / 102a

**DATA SET** 140 (images, masks, & quality scores)

QUALITY THRESHOLD 154 / TASK 152

**IMAGE PROCESSING FUNCTION** 150 — MASK 156

**IMAGE PROCESSING RESULT** 158

# FIG. 2A

200

bird

plank

# FIG. 2B

210

212

214

216

# FIG. 3

EP 4 597 442 A1

FIG. 4

# FIG. 5

# FIG. 6

EP 4 597 442 A1

FEATURE PYRAMID NETWORK  600

608

CONV. 601 → ⊕ → CONV. 611 → FAB 621

CONV. 602 → ⊕ → CONV. 612 → FAB 622

CONV. 603 → ⊕ → CONV. 613 → FAB 623

CONV. 604 → CONV. 614 → FAB 624

606

MP 615 → FAB 625

# FIG. 7

**MASK DECODER 700**

- IMG. TO TOKEN ATTN. 704
- MULTI-LAYER PRCP. 703
- TOKEN TO IMG. ATTN. 702
- SELF-ATTENTION 701

2X CONV. TRANS. 711

TOKEN TO 712 IMG. ATTN.

MLP 713

714

**MASKS 112**
- MASK 321
- MASK 322
- MASK 323

**TOKENS 114**
- TOKEN 311
- TOKEN 312
- TOKEN 313

EP 4 597 442 A1

## FIG. 8

800

START

| Flowchart 900a | TRAIN OBJECT DETECTOR | 802 |
| | TRAIN QUALITY PREDICTOR | 804 |

| Flowchart 900b | GENERATE SEGMENTATION MASKS | 806 |
| | SCORE SEGMENTATION MASKS | 808 |

USE SELECTED SEGMENTATION MASK(S)                                    810
IN IMAGE PROCESSING TASK

Flowchart 900c

SELECT SEGMENTATION MASK(S)                                   812

| SELECT TOP-SCORING MASK 814 | SELECT MASK(S) MEETING QUALITY THRESHOLD 816 |

PERFORM IMAGE PROCESSING TASK                           818

DONE

# FIG. 9A

900a

START

TRAINING OBJECT DETECTOR TO
LEARN A PLURALITY OF TOKENS 902

RECEIVE TRAINING IMAGES AND TRAINING
SEGMENTATION MASKS ANNOTATED WITH QUALITY SCORES 904

TRAIN QUALITY PREDICTOR TO ASSIGN QUALITY
SCORES WITHOUT NEEDING GROUND TRUTH 906

END

# FIG. 9B

900b

```
                    ( START )
                       │
                       ▼
┌──────────────────────────────────────────────────────┐
│     RECEIVE IMAGE WITH MULTIPLE OBJECTS        932     │
└──────────────────────────────────────────────────────┘
                       │
                       ▼
┌──────────────────────────────────────────────────────┐
│ LOOP BASED ON NUMBER OF TOKENS                         │
│  ┌──────────────────────────────────────────────────┐ │
│  │          RECEIVE TOKEN                    934     │ │
│  └──────────────────────────────────────────────────┘ │
│                     │                                  │
│                     ▼                                  │
│  ┌──────────────────────────────────────────────────┐ │
│  │ GENERATE SEGMENTATION MASK               936     │ │
│  │  ┌────────────────────────────────────────────┐  │ │
│  │  │   MULTI-STAGE ENCODING PROCESS      938    │  │ │
│  │  └────────────────────────────────────────────┘  │ │
│  │                 │                                 │ │
│  │                 ▼                                 │ │
│  │  ┌────────────────────────────────────────────┐  │ │
│  │  │   AGGREGATE MULTI-SCALE FEATURES    940    │  │ │
│  │  └────────────────────────────────────────────┘  │ │
│  │                 │                                 │ │
│  │                 ▼                                 │ │
│  │  ┌────────────────────────────────────────────┐  │ │
│  │  │   MODULATE AGGREGATED FEATURES      942    │  │ │
│  │  └────────────────────────────────────────────┘  │ │
│  └──────────────────────────────────────────────────┘ │
│                     │                                  │
│                     ▼                                  │
│  ┌──────────────────────────────────────────────────┐ │
│  │      PERSIST SEGMENTATION MASK           944     │ │
│  │      ASSOCIATED WITH IMAGE                        │ │
│  └──────────────────────────────────────────────────┘ │
└──────────────────────────────────────────────────────┘
                       │
                       ▼
┌──────────────────────────────────────────────────────┐
│ LOOP BASED ON NUMBER OF SEGMENTATION MASKS             │
│  ┌──────────────────────────────────────────────────┐ │
│  │  RECEIVE IMAGE AND SEGMENTATION MASK     946     │ │
│  └──────────────────────────────────────────────────┘ │
│                     │                                  │
│                     ▼                                  │
│  ┌──────────────────────────────────────────────────┐ │
│  │      ASSIGN QUALITY SCORE                948     │ │
│  └──────────────────────────────────────────────────┘ │
│                     │                                  │
│                     ▼                                  │
│  ┌──────────────────────────────────────────────────┐ │
│  │  PERSIST QUALITY SCORE ASSOCIATED        950     │ │
│  │  WITH SEGMENTATION MASK AND IMAGE                 │ │
│  └──────────────────────────────────────────────────┘ │
└──────────────────────────────────────────────────────┘
                       │
                       ▼
                    (  END  )
```

# FIG. 9C

900c

START

RETRIEVE IMAGE AND QUALITY SCORES
ASSOCIATED WITH SEGMENTATION MASKS    962

SELECT SEGMENTATION MASK(S)
USING ASSOCIATED QUALITY SCORE    964

PERFORM IMAGE PROCESSING TASK USING
RETRIEVED IMAGE AND SELECTED MASK(S)    966

END

# FIG. 10

1000

START

RECEIVE A FIRST IMAGE INCLUDING A FIRST OBJECT OF THE FIRST IMAGE AND A SECOND OBJECT OF THE FIRST IMAGE · 1002

BASED ON AT LEAST RECEIVING THE FIRST IMAGE AND A FIRST TOKEN, GENERATE, WITH A PLURALISTIC OBJECT DETECTOR, A FIRST SEGMENTATION MASK · 1004

BASED ON AT LEAST RECEIVING THE FIRST IMAGE AND A SECOND TOKEN, GENERATE, WITH THE PLURALISTIC OBJECT DETECTOR, A SECOND SEGMENTATION MASK, WHEREIN THE FIRST SEGMENTATION MASK CORRESPONDS TO THE FIRST OBJECT OF THE FIRST IMAGE BUT NOT THE SECOND OBJECT OF THE FIRST IMAGE, AND THE SECOND SEGMENTATION MASK CORRESPONDS TO AT LEAST THE SECOND OBJECT OF THE FIRST IMAGE · 1006

PERSIST THE FIRST SEGMENTATION MASK AND THE SECOND SEGMENTATION MASK · 1008

END

# FIG. 11

1100

MEMORY     1112
DATA     1112a
INSTRUCTIONS     1112b

1118
I/O
PORT(S)

1114
PROCESSOR(S)

1120
I/O
COMPONENTS

1116
PRESENTATION
COMPONENT(S)

1122
POWER
SUPPLY

1124
NETWORK
COMPONENT

1126a

1126

1110

1130
NETWORK

1128

Europäisches
Patentamt

European
Patent Office

Office européen
des brevets

# EUROPEAN SEARCH REPORT

**Application Number**

EP 25 15 3921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIRILLOV ALEXANDER ET AL: "Segment Anything", 2023 IEEE/CVF INTERNATIONAL CONFERENCE ON COMPUTER VISION (ICCV), [Online] 5 April 2023 (2023-04-05), pages 3992-4003, XP093256960, DOI: 10.1109/ICCV51070.2023.00371 ISBN: 979-8-3503-0718-4 Retrieved from the Internet: URL:https://arxiv.org/pdf/2304.02643> | 1-4, 8-11,15 | INV. G06V10/26 G06V10/44 G06V10/774 G06V10/82 |
| A | * the whole document * | 5-7, 12-14 | |
| X | ZIJIAN ZHOU ET AL: "Text Promptable Surgical Instrument Segmentation with Vision-Language Models", ARXIV.ORG, CORNELL UNIVERSITY LIBRARY, 201 OLIN LIBRARY CORNELL UNIVERSITY ITHACA, NY 14853, 29 October 2023 (2023-10-29), XP091646853, | 1-4, 8-11,15 | |
| A | * section 3; page 3 - page 6 * | 5-7, 12-14 | **TECHNICAL FIELDS SEARCHED (IPC)** G06V |
| X | LIANG XIWEN ET AL: "Visual Exemplar Driven Task-Prompting for Unified Perception in Autonomous Driving", 2023 IEEE/CVF CONFERENCE ON COMPUTER VISION AND PATTERN RECOGNITION (CVPR), IEEE, 17 June 2023 (2023-06-17), pages 9611-9621, XP034402534, DOI: 10.1109/CVPR52729.2023.00927 [retrieved on 2023-08-22] | 1-4, 8-11,15 | |
| A | * section 4; page 9614 - page 9616 * | 5-7, 12-14 | |

-/--

The present search report has been drawn up for all claims

| Place of search | Date of completion of the search | Examiner |
|---|---|---|
| The Hague | 27 May 2025 | Chehade, Thomas |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI HAO ET AL: "Boosting Low-Data Instance Segmentation by Unsupervised Pre-training with Saliency Prompt", 2023 IEEE/CVF CONFERENCE ON COMPUTER VISION AND PATTERN RECOGNITION (CVPR), IEEE, 17 June 2023 (2023-06-17), pages 15485-15494, XP034403172, DOI: 10.1109/CVPR52729.2023.01486 [retrieved on 2023-08-22] | 1-4, 8-11,15 | |
| A | * section 3; page 15488 - page 15489 * | 5-7, 12-14 | |

-----

|  | TECHNICAL FIELDS SEARCHED (IPC) |
|---|---|

The present search report has been drawn up for all claims

| Place of search | Date of completion of the search | Examiner |
|---|---|---|
| The Hague | 27 May 2025 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)